# EUROPÄISCHE PATENTSCHRIFT

(11) **EP 3 852 004 B1**
(45) Veröffentlichungstag und Bekanntmachung des Hinweises auf die Patenterteilung: **27.12.2023**
(21) Anmeldenummer: 20152126.7
(22) Anmeldetag: 16.01.2020
(51) Int. Cl.: G08G 1/14, G08G 1/04, G08G 1/01, G06V 20/58

(54) **VORRICHTUNG ZUM ERFASSEN VON INFORMATIONEN ZU BELEGUNGSZUSTÄNDEN VON PARKPLÄTZEN UND VERFAHREN HIERZU**
DEVICE FOR DETECTING INFORMATION RELATING TO OCCUPANCY STATES OF PARKING SPACES AND METHOD FOR SAME
DISPOSITIF DE DÉTECTION D'INFORMATIONS SUR L'ÉTAT D'OCCUPATION DE PLACES DE STATIONNEMENT ET PROCÉDÉ ASSOCIÉ

(43) Veröffentlichungstag der Anmeldung: 21.07.2021
(73) Patentinhaber: Parkling GmbH, 10178 Berlin (DE)
(72) Erfinder: FRETTER, Christoph, 12435 Berlin (DE); HASHIMOTO, Mark, 10823 Berlin (DE); HÜLSEBUSCH, Detlev, 10115 Berlin (DE); QUINSON, Clement, 10119 Berlin (DE)
(74) Vertreter: Wunderlich & Heim Patentanwälte Partnerschaftsgesellschaft mbB

(56) Entgegenhaltungen:
- DE-A1-102014 009 627
- DE-A1-102014 217 900
- DE-A1-102015 225 415
- DE-A1-102017 100 983
- DE-A1-102017 130 488
- DE-A1-102018 113 496
- US-A1- 2014 085 112
- US-A1- 2019 359 147
- Sick: "LMS1000 LIGHTNING-FAST MEASUREMENT - IN RECORD TIME!", , 13. September 2019 (2019-09-13), XP055708258, Gefunden im Internet: URL:https://cdn.sick.com/media/docs/1/21/1 21/Product_information_LMS1000_2D_LiDAR_se nsors_en_IM0080121.PDF [gefunden am 2020-06-24]

## Beschreibung

Die Erfindung betrifft eine Vorrichtung gemäß dem unabhängigen Anspruch 1 zum Erfassen von Informationen zu einem Belegungszustand von Parkplätzen.

Ferner betrifft die Erfindung ein Verfahrer gemäß dem unabhängigen Anspruch 13 zum Erfassen von Informationen zu einem Belegungszustand von Parkplätzen unter Verwendung der erfindungsgemäßen Vorrichtung. Weitere vorteilhafte Weiterbildungen der Erfindung ergeben sich aus den Unteransprüchen 2-12.

Durch die Zunahme der Bevölkerung in städtischen Gebieten nimmt der Verkehr, insbesondere auch der Individualverkehr mit Pkws, zu. Gerade im innerstädtischen Bereich führt diese massive Zunahme der Verkehrsdichte zu Problemen, die einen Mangel an Platzangebot zur Folge haben, der nicht mehr mit einfachen Mitteln gelöst werden kann. Weitere Probleme sind die damit einhergehende Lärmbelästigung durch den Verkehr aber auch die mittlerweile immer kritischer gesehene Belastung durch Schadstoffe.

Studien haben gezeigt, dass ca. 30% des innerstädtischen Verkehrs kein klassischer Beförderungsverkehr ist, sondern auf Fahrzeuge zurückzuführen ist, die auf Parkplatzsuche sind.

Hochrechnungen auf Deutschland ergeben, dass hierbei 1,9 Milliarden Stunden für die Parkplatzsuche aufgewendet werden. Hierbei werden 3,2 Milliarden Liter Treibstoff verbraucht. Insgesamt geht man von einem volkswirtschaftlichen Verlust in Höhe von 40,4 Milliarden EUR aus.

Der Wunsch nach einem Parkraummanagement, der diesen Verkehr zur Parkplatzsuche reduziert, ist daher in zunehmendem Maße gegeben.

Bei derartigen Systemen wird grundsätzlich von zwei Zuständen der Datenermittlung unterscheiden. Zum einen müssten statische Daten beschafft werden, aus denen hervorgeht, wo Parkplätze sind, zu welchen Zeiten man an diesen Parkplätzen man parken darf, aber auch Informationen, wie die Parkplätze zu beparken sind, beispielsweise als Längsparker oder Querparker. Dies beinhaltet auch Informationen über Parkverbotszonen sowie eventuelle Preise für das Parken. Derartige Daten werden als statische Daten bezeichnet und stellen die Grundvoraussetzung für ein Parkraummanagement dar.

Allerdings reichen diese Daten nicht aus, um ein aktives effizientes Parkraummanagement anzubieten. Hierfür sind noch zusätzlich sogenannte dynamische Daten notwendig. Diese bilden Informationen ab, auf deren Grundlage eine aktuelle Parkplatzbelegungssituation ermittelt werden kann.

Die Ermittlung von derartigen statischen Daten wird beispielsweise in der DE 10 2008 21 415 A1 oder der DE 10 2016 212 505 A1 beschrieben.

Aus der DE 10 2018 113 496 A1 geht beispielsweise ein System hervor, welches mit fest in einem Fahrzeug eingebauten Sensoren versucht, Sensordaten und Positionsdaten von Parkplätzen zu ermitteln.

Die Ermittlung von dynamischen Daten oder deren Vorhersage ist beispielsweise aus der DE 10 2018 107 510 B1 oder der WO 2016/200883 A1 bekannt.

Gerade bei der Ermittlung von dynamischen Parkdaten ergeben sich aus den bekannten Verfahren jedoch die Probleme, dass diese entweder ungenau sind oder einen hohen Investitionsaufwand erfordern, wenn sie beispielsweise fest verbaute Sensoren für Parkplätze vorsehen.

Der Erfindung liegt daher die **Aufgabe** zugrunde, eine Vorrichtung und ein Verfahren zum Erfassen von Informationen zu einem Belegungszustand von Parkplätzen anzugeben, welche effizient und leicht skalierbar sind.

Diese Aufgabe wird erfindungsgemäß durch eine Vorrichtung mit den Merkmalen des Anspruchs 1 und ein Verfahren mit den Merkmalen des Anspruchs 13 gelöst. Vorteilhafte Ausführungsformen der Erfindung sind in den Unteransprüchen, in der Beschreibung sowie der Figur und deren Erläuterung angegeben.

Die erfindungsgemäße Vorrichtung weist eine Einrichtung zur Positionsbestimmung auf. Ferner ist eine Steuer- und Auswerteeinheit vorgesehen, welche ausgebildet ist, die Daten des Sensors mit den Daten der Einrichtung zur Positionsbestimmung zu verknüpften Daten zu verknüpfen. Außerdem ist der Sensor so ausgebildet, dass er mindestens einen Abstand von 40 Metern erkennt.

Der Erfindung liegt die Idee zugrunde, dass es bei vorhandenen statischen Parkplatzdaten ausreichend ist, die Entfernungen zwischen einem an einem Fahrzeug befestigten Sensor und dem nächstmöglichen Objekt zu bestimmen, um Aussagen über den aktuellen Belegungszustand eines Parkplatzes zu tätigen. Hierbei wird mittels des Sensors, welcher mit der Befestigungseinrichtung an dem Fahrzeug befestigt ist, und seitlich zur Fahrtrichtung des Fahrzeuges ausgerichtet ist, jeweils die Entfernung vom Sensor zum nächsten Objekt ermittelt.

Fährt das Fahrzeug mit dem Sensor eine Straße entlang, bei der seitlich Autos geparkt sind, so ist die ermittelte Entfernung, also der Abstand zwischen dem Sensor und einem Objekt, meist im Bereich zwischen 1 und 3 Metern zu erwarten. Dies hängt auch von der exakten Positionierung des Sensors am Fahrzeug ab.

Bei einem derartig ermittelten Abstand kann ein nachgeschaltetes Parkplatzmanagementsystem davon ausgehen, dass auf der zu den Daten gehörenden Position ein Fahrzeug beziehungsweise ein Objekt abgestellt ist, sofern es sich um einem möglichen Parkplatz entsprechend der vorhandenen statischen Daten handelt.

Wird andererseits ermittelt, dass das nächste Objekt beispielsweise die Hauswand in 8 bis 10 Metern Entfernung ist, so kann daraus geschlossen werden, dass bei einem grundsätzlichen Vorhandensein einer Parkmöglichkeit entsprechend der statischen Daten, diese Parkmöglichkeit nicht belegt ist.

Um ein Auswerten der so ermittelten dynamischen Daten, das heißt des aktuellen Abstandes des Sensors vom nächsten Objekt, zu ermöglichen, ist entsprechend der Erfindung eine Einrichtung zur Positionsbestimmung vorgesehen. Die Daten der Einrichtung zur Positionsbestimmung werden mit den Sensordaten verknüpft, so dass verknüpfte Daten zur Verfügung stehen. Diese verknüpften Daten werden dann in einem nachgeschalteten Parkraummanagementsystem mit vorhandenen statischen Parkdaten ausgewertet, um aktuelle Aussagen über den Belegungszustand von Parkplätzen zu tätigen.

Hieraus können zum einen statistische Vorhersagen unter Berücksichtigung der Uhrzeit, des Tages als auch zeitaktuelle Informationen zum Belegungszustand ermittelt werden.

Bevorzugt ist es, wenn der Sensor mindestens eine Abtastfrequenz von 140 Hz aufweist. Diese Anforderung beruht auf der Annahme, dass bei einer Geschwindigkeit innerorts von maximal 50 km/h eine minimal notwendige Auflösung von ca. 10 cm erreicht werden muss. Eine derartige örtliche Auflösung von 10 cm hat sich als notwendig herausgestellt, um verlässliche Daten über den Belegungszustand von Parkplätzen zu tätigen. Eine derartige Auflösung ist notwendig, da sich auf Parkplätzen abgestellte Objekte, insbesondere Autos, an unterschiedlichen Positionen befinden können. Auch ist zu berücksichtigen, dass beispielsweise nicht jedes Auto dieselbe Länge hat oder auch Motorräder etwa quer abgestellt sein können. Eine Auflösung von ca. 10 cm im Sinne der Erfindung bedeutet, dass mindestens alle 10 cm eine Abstandsmessung durchgeführt wird.

Die Verarbeitung der mittels des Sensors erhaltenen Daten kann vereinfacht werden, wenn der Erkennungsbereich im am Fahrzeug befestigten Zustand auf zwischen 85° und 95° zur Fahrtrichtung, bevorzugt ungefähr 90°, ausgerichtet ist. Eine derartige Ausrichtung bietet den Vorteil, dass keine zusätzliche Abweichung der Position des Sensors zu den ermittelten Daten berücksichtigt werden muss und so der Abstand ohne Korrekturen verwendet werden kann. Anders ausgedrückt, entspricht so der Abstand, der mittels des Sensors ermittelt wurde, dem Abstand zwischen dem Sensor und dem senkrecht zur Fahrtrichtung befindlichen Objekt. Wäre der Sensor weiter nach vorne oder hinten ausgerichtet, so müsste dies bei einer Auswertung berücksichtigt werden.

Grundsätzlich können verschiedene Arten von Sensoren eingesetzt werden. Beispielsweise könnten Ultraschallsensoren, Kameras, paralaxebasierte Laser oder dergleichen verwendet werden. Besonders einfach ist jedoch die Verwendung eines LIDAR Sensors, erfindungsgemäß 1D LIDAR Sensors.

In einer nicht beanspruchten Ausführungsform können aber auch 2D oder 3D LIDAR Sensoren eingesetzt werden. Der Vorteil bei der Verwendung von LIDAR Sensoren gegenüber den zuvor genannten anderen Sensoren ist ihre relativ hohe Robustheit gegen Umwelteinflüsse und ihre hohe Genauigkeit. Insbesondere bei der Verwendung eines 1D LIDAR Sensors können die notwendigen Investitionskosten gering gehalten werden. Dies ist vorteilhaft, da die erfindungsgemäße Vorrichtung bevorzugt nicht nur an einem Fahrzeug, sondern einer ganzen Flotte von Fahrzeugen eingesetzt und montiert werden soll, um eine Vielzahl von Daten zu ermitteln. Beispielsweise bietet es sich an, die erfindungsgemäße Vorrichtung an Taxis anzubauen oder zu befestigen, da diese sich normalerweise gerade in den Innenstadtbereichen regelmäßig bewegen. Ein weiterer Vorteil des Verwendens eines LIDAR Sensors ist, dass keine Bilder aufgezeichnet werden, welche persönlich identifizierende Informationen enthalten können. Daher kann auf notwendige aufwändige Schritte zum Datenschutz verzichtet werden.

Um den Ein- beziehungsweise Anbau der erfindungsgemäßen Vorrichtung zu erleichtern ist es bevorzugt, wenn die Vorrichtung lediglich den Strom vom Fahrzeug bezieht. Anders ausgedrückt, ist die Vorrichtung insgesamt autark ausgebildet. Dies bietet die Möglichkeit, dass sie an verschiedene Fahrzeuge angebracht werden kann und keine Integration in das Fahrzeugsystem selbst benötigt.

Vorteilhaft ist es, wenn ein Datenmodem zur drahtlosen Übertragung der verknüpften Daten vorgesehen ist. Mittels dieses Datenmodems können die verknüpften Daten an eine zentrale Stelle, beispielsweise einen zentralen Server eines Parkraummanagementsystems übertragen werden und dort dann in einem weiteren Schritt verarbeitet werden.

Die Übertragung kann mittels der Steuer- und Auswerteeinheit kontinuierlich oder quasi-kontinuierlich erfolgen. Unter quasi-kontinuierlich im Sinne der Erfindung kann beispielsweise eine Übertragung der ermittelten Daten in jeder Minute, alle 15 Minuten oder alle 10 Minuten betrachtet werden. Auch unter kontinuierlich muss nicht ein Nonstop-Datenstrom verstanden werden, sondern, dass in sinnvollen Abständen, die beispielsweise ein Abstand von 30 oder 10 Sekunden sind, eine Übertragung stattfindet.

Die Übertragung der Daten hat den Vorteil, dass so die ermittelten dynamischen Daten zur Belegung von Parkplätzen einem Parkraummanagementsystem zur Verfügung stehen, von diesem ausgewertet und weiterverarbeitet werden können.

Grundsätzlich kann die Einrichtung zur Positionsbestimmung beliebig ausgeführt sein. Um gerade im städtischen Bereich, in dem die Positionsbestimmung oft nicht einfach ist, die Datengenauigkeit zu erhöhen, kann eine inertiale Messeinheit vorgesehen sein. Mittels dieser können die ermittelten Daten der Positionsbestimmung optimiert werden.

Eine alternative oder zusätzliche Möglichkeit, die Daten der Positionsbestimmung zu optimieren, ist eine separate externe Antenne vorzusehen, welche mit der erfindungsgemäßen Vorrichtung verbindbar ist. Hierbei kann es sich beispielsweise um eine Antenne handeln, welche auf dem Dach des Fahrzeugs befestigt wird.

In diesem Zusammenhang kann die Einrichtung zur Positionsbestimmung, insbesondere zur globalen Positionsbestimmung, zur satellitengestützten Positionsbestimmung ausgelegt sein. Beispielsweise kann sie nach dem GPS-Standard, Galileo-, Glonass-, und/oder Beidou-Standard ausgelegt sein. Es ist auch möglich, dass sie mehrere dieser Standards gleichzeitig nutzt, um die Qualität der ermittelten Position zu erhöhen. Grundsätzlich können auch andere Positionsbestimmungssysteme verwendet werden. Sollten in einem Bereich auch lokale Positionsbestimmungssysteme vorhanden sein, so ist es selbstverständlich auch möglich, diese zusätzlich oder alternativ zu verwenden.

Aufgrund der zuvor beschriebenen hohen Frequenz und der damit verbundenen örtlichen Auflösung, der mit dem Sensor ermittelten Daten im Bereich von 10 cm, ist eine möglichst genaue Auflösung der örtlichen Position wünschenswert. Diese kann beispielsweise auch dadurch verbessert werden, dass in der Vorrichtung eine Markerdatenbank vorgesehen ist und die Steuer- und Auswerteeinrichtung ausgebildet ist, die verknüpften Daten, insbesondere deren Lokalisierung, anhand der Markerdatenbank zu optimieren. Bei der Markerdatenbank kann es sich beispielsweise um Teile einer Datenbank zu statischen Objekten in einer Stadt oder dergleichen handeln.

Beispielsweise bieten sich hierfür Laternenpfähle, Bäume oder Häuserecken an. Diese Daten können nur verwendet werden, um ein Offset zu den Positionsbestimmungsdaten zu ermitteln.

Eine alternative oder auch fakultative Möglichkeit die Auflösung der örtlichen Position zu erhöhen beziehungsweise zu verbessern, kann auch das Verwenden von Daten für differentielle globales Positionierungssysteme, wie DGPS, die kommerziell erhältlich sind, sein. Ebenso kann alternative oder zusätzlich Real Time Kinematic (RTK) zur Erhöhung der Positionsgenauigkeit eingesetzt werden.

Ferner betrifft die Erfindung ein Parkraummanagementsystem mit mindestens einem Fahrzeug, welches eine erfindungsgemäße Vorrichtung aufweist. Diese Vorrichtung ist, wie bereits zuvor dargelegt, bevorzugt entfernbar an dem Fahrzeug befestigt. Wird dieses Fahrzeug in einem gewünschten Bereich bewegt, so können mittels der erfindungsgemäßen Vorrichtung an das Parkraummanagementsystem Informationen zu den Belegungszuständen der Parkplätze übermittelt werden. Um den Datenfluss zu erhöhen, können selbstverständlich auch mehrere Fahrzeuge vorgesehen sein.

Abschließend betrifft die Erfindung auch ein Verfahren zum Erfassen von Informationen zu einem Belegungszustand von Parkplätzen, insbesondere mit einer Vorrichtung nach den Ansprüchen 1 bis 13, wobei die erfindungsgemäße Vorrichtung mittels der Befestigungseinrichtung an einem Fahrzeug befestigt wird und das Fahrzeug im Straßenverkehr bewegt wird. Währenddessen werden mittels des Sensors Daten zum Abstand zwischen dem Sensor und einem Objekt und mittels der Einrichtung zur Positionsbestimmung Daten ermittelt, welche zu verknüpften Daten verknüpft werden. Diese verknüpften Daten werden an eine externe Auswerteeinheit weitergeleitet.

Mittels dieses Verfahrens ist es möglich, dynamische Informationen zu momentanen Belegungszuständen von Parkplätzen zu ermitteln, welche dann von einem Parkraummanagementsystem ausgewertet werden können. Hierbei kann die Auswertung zeitnah erfolgen, wenn die ermittelten verknüpften Daten direkt übertragen werden oder auch nachträglich, sofern die verknüpften Daten in der erfindungsgemäßen Vorrichtung gespeichert werden.

Die Erfindung wird nachfolgen anhand eines schematischen Ausführungsbeispiels unter Bezugnahme auf die Figur näher erläutert. Hierbei zeigt:

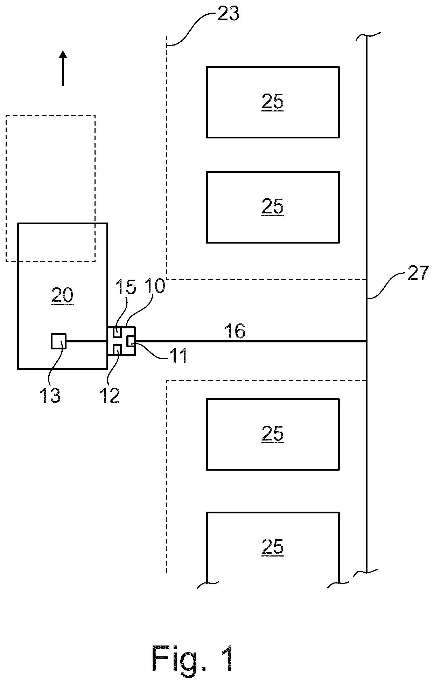

- Fig. 1: eine schematische Ansicht der erfindungsgemäßen Vorrichtung bei der Verwendung.

In Fig. 1 ist eine stark vereinfachte Darstellung der erfindungsgemäßen Vorrichtung 10 bei ihrer Verwendung gezeigt.

Die erfindungsgemäße Vorrichtung 10 ist hierfür an einem Fahrzeug 20, beispielsweise einem Taxi, befestigt. Die Vorrichtung 10 weist einen Sensor 11 sowie eine Einrichtung zur Positionsbestimmung 12 auf. Hierbei kann es sich beispielsweise um einen GPS Sensor handeln. Dieser GPS Sensor 12 ist mit einer externen Antenne 13, welche auf dem Dach des Fahrzeuges 20 befestigt ist, verbunden. So kann die Qualität des GPS-Signales erhöht werden.

Die erfindungsgemäße Vorrichtung 10 kann entweder seitlich am Fahrzeug 20, beispielsweise über dem hinteren Reifen oder auch auf der rückwärtigen Stoßstange befestigt sein. Selbstverständlich ist es auch möglich, die erfindungsgemäße Vorrichtung 10 an der vorderen Stoßstange oder an der Türe zu befestigen.

Erfindungsgemäß ist ferner vorgesehen, dass die Vorrichtung 10 auf Höhe im Bereich zwischen 40 und 70 cm bezogen auf das Straßenniveau vorgesehen ist. Eine derartige Höhe liefert die besten Ergebnisse, wie im Folgenden beschrieben.

Die Vorrichtung 10 ist so angebracht, dass der Sensor 11 seitlich zur Fahrtrichtung 21 ausgerichtet ist. Bei dem Sensor 11 handelt es sich erfindungsgemäß um einen 1D LIDAR Sensor. Eine derartig aufgebaute Vorrichtung 10 ist relativ kostengünstig, beispielsweise bereits für ca. EUR 500,- aufbaubar. Daher kann sie als flottengeeignet angesehen werden, so dass eine große Zahl erfindungsgemäßer Vorrichtungen 10 auf verschiedene Fahrzeuge 20 angeordnet werden kann.

Der Sensor 11 ist seitlich zur Fahrtrichtung 21 ausgerichtet und misst die Entfernung 16 vom Sensor 11 zum nächsten Objekt. In Fig. 1 ist ferner ein Parkbereich 23 dargestellt, auf dem mehrerer Objekte 25 abgestellt sind. Der Parkbereich 23 wird auf der der Straße abgewandten Seite durch eine Hauswand 27 abgeschlossen. Mittels des Sensors 11 kann die Vorrichtung 10 nun den Abstand zwischen dem Sensor 11 und dem nächsten Objekt 25, 27 ermitteln. In der hier dargestellten Position wird der Abstand zur Hauswand 27 ermittelt.

Würde sich das Fahrzeug 20 in der Position 22 befinden, welche durch gestrichelte Linien angedeutet ist, würde wiederum ein anderer Abstand zu einem der Objekt 25 festgestellt werden.

Basierend auf dem ermittelten Abstand kann zunächst einmal keine definierte Aussage über einen Belegungszustand von Parkplätzen getätigt werden, da noch keine Informationen vorhanden sind, ob beispielsweise an der zuerst gezeigten Stelle eine Einfahrt liegt, in der nicht geparkt werden kann oder eben ein Parkplatz frei ist. Um diesen Rückschluss zu ermöglichen, sind statische Parkplatzdaten notwendig, welche genau diesen statischen Informationen beinhalten.

Eine Verknüpfung dieser statischen Parkplatzdaten mit den ermittelten dynamisch Daten kann beispielweise erfolgen, indem die Vorrichtung 10 ein Modem 15 aufweist, welches die so ermittelten dynamischen Daten an einen zentralen Server überträgt, der Zugriff auf die statischen Parkplatzdaten hat. Somit können mittels eines Parkplatzmanagementsystems Aussagen über die aktuelle Belegung aber auch Prognosen für zukünftige Belegungen oder statistische Vorhersagen getätigt werden.

Mit der erfindungsgemäßen Vorrichtung und dem erfindungsgemäßen Verfahren ist es so möglich, dynamische Informationen zur Belegungszuständen von Parkplätzen effizient zu ermitteln.

## Patentansprüche

1. Vorrichtung (10) zum Erfassen von Informationen zu einem Belegungszustand von Parkplätzen
mit einem Sensor (11), welcher einen Erkennungsbereich aufweist,
wobei der Erkennungsbereich im am Fahrzeug (20) befestigten Zustand seitlich zur Fahrtrichtung (21) des Fahrzeuges (20) ausgerichtet ist,
wobei der Sensor (11) zum Ermitteln von Daten zum Abstand zwischen dem Sensor (11) und einem Objekt (25, 27) ausgebildet ist,
wobei der Sensor (11) ausgebildet ist, mindestens einen Abstand von 40 m zu erkennen,
**dadurch gekennzeichnet, dass** die Vorrichtung autark, ohne Integration in das Fahrzeugsystem, ausgebildet ist,
dass eine Befestigungseinrichtung zum Befestigen an einem Fahrzeug (20) vorgesehen ist, die ausgebildet ist die Vorrichtung (10) im Bereich zwischen 40 cm und 70 cm bezogen auf das Straßenniveau vorzusehen,
dass die Vorrichtung (10) eine Einrichtung (12) zur Positionsbestimmung aufweist,
dass eine Steuer- und Auswerteeinheit vorgesehen ist, welche ausgebildet ist, die Daten des Sensors (11) mit Daten der Einrichtung (12) zur Positionsbestimmung zu verknüpfen,
dass der Sensor (11) ein 1D LIDAR Sensor ist und
dass der Erkennungsbereich im am Fahrzeug (20) befestigten Zustand zwischen 85° und 95° zur Fahrtrichtung (21) ausgerichtet ist.

2. Vorrichtung (10) nach Anspruch 1,
**dadurch gekennzeichnet,**
**dass** der Sensor (11) mindestens eine Abtastfrequenz von 140 Hz aufweist.

3. Vorrichtung (10) nach Anspruch 1 oder 2,
**dadurch gekennzeichnet,**
**dass** der Erkennungsbereich im am Fahrzeug (20) befestigten Zustand 90° zur Fahrtrichtung (21) ausgerichtet ist.

4. Vorrichtung (10) nach einem der Ansprüche 1 bis 3, **dadurch gekennzeichnet,**
**dass** die Vorrichtung (10) nur Strom vom Fahrzeug (20) bezieht.

5. Vorrichtung (10) nach einem der Ansprüche 1 bis 4, **dadurch gekennzeichnet,**
**dass** ein Datenmodem (15) zur drahtlosen Übertragung der verknüpften Daten vorgesehen ist.

6. Vorrichtung (10) nach Anspruch 5, **dadurch gekennzeichnet,**
**dass** die Steuer- und Auswerteeinheit zur kontinuierlichen oder quasi kontinuierlichen Übermittlung der verknüpften Daten mittels des Datenmodems (15) an einem externen Server ausgebildet ist.

7. Vorrichtung (10) nach einem der Ansprüche 1 bis 6, **dadurch gekennzeichnet,**
**dass** die Einrichtung (12) zur Positionsbestimmung eine inertiale Messeinheit zur Optimierung der Daten aufweist.

8. Vorrichtung (10) nach einem der Ansprüche 1 bis 7, **dadurch gekennzeichnet,**
**dass** eine separate externe Antenne (13), welche mit der Vorrichtung (10) verbindbar ist, für die Einrichtung (12) zur globalen Positionsbestimmung vorgesehen ist.

9. Vorrichtung (10) nach einem der Ansprüche 1 bis 8, **dadurch gekennzeichnet,**
**dass** die Einrichtung (12) zur Positionsbestimmung zur satellitengestützten Positionsbestimmung ausgelegt ist und insbesondere entsprechend dem GPS-, Galileo-, Glonass- und/oder Beidou-Standard ausgebildet ist.

10. Vorrichtung (10) nach Anspruch 9, **dadurch gekennzeichnet,**
**dass** die Einrichtung (12) zur globalen Positionsbestimmung parallel mehrere Standards nutzt.

11. Vorrichtung (10) nach einem der Ansprüche 1 bis 10, **dadurch gekennzeichnet,**
**dass** eine Marker Datenbank vorgesehen ist, und
**dass** die Steuer- und Auswerteeinheit ausgebildet ist, die verknüpften Daten anhand der Marker Datenbank zu optimieren.

12. Parkraummanagementsystem **gekennzeichnet durch** mindestens ein Fahrzeug (20) mit einer Vorrichtung (10) nach einem der Ansprüche 1 bis 11.

13. Verfahren zum Erfassen von Informationen zu einem Belegungszustand von Parkplätzen mit einer Vorrichtung (10) nach einem der Ansprüche 1 bis 12, **dadurch gekennzeichnet,**
**dass** das Fahrzeug (20) im Straßenverkehr bewegt wird,
**dass** mittels des Sensors (11), der ein 1D LIDAR Sensor ist und ausgebildet ist mindestens einen Abstand von 40 m erkennen zu können, Daten zum Abstand zwischen dem Sensor (11) und einem Objekt (25, 27) und mittels der Einrichtung (12) zur Positionsbestimmung Positionsdaten ermittelt werden und dass die Daten von der Steuer- und Auswerteeinheit als verknüpfte Daten verknüpft werden und
**dass** die verknüpften Daten an eine externe Auswerteeinheit weitergeleitet werden.

## Claims

1. Apparatus (10) for acquiring information on an occupancy state of parking spaces with a sensor (11) which has a detection area,
wherein in the fixed state on the vehicle (20) the detection area is aligned laterally to the direction of travel (21) of the vehicle (20),
wherein the sensor (11) is designed for determining data on the distance between the sensor (11) and an object (25, 27),
wherein the sensor (11) is designed to detect at least a distance of 40 m,
**characterized in that**
the device is designed to be self-sufficient, without integration into the vehicle system,
**in that** a fastening device for fastening to a vehicle (20) is provided, which is designed to provide the device (10) in the range between 40 cm and 70 cm with respect to the road level,
**in that** the apparatus (10) has a device (12) for position determination,
**in that** a control and evaluation unit is provided which is designed to link the data of the sensor (11) with data of the device (12) for position determination
**in that** the sensor (11) is a 1D LIDAR sensor, and
**in that** the detection area is aligned between 85° and 95° to the direction of travel (21) in the state attached to the vehicle (20).

2. Apparatus (10) according to claim 1,
**characterized in that**
the sensor (11) has at least a scanning frequency of 140 Hz.

3. Apparatus (10) according to claim 1 or 2,
**characterized in that**
in the fixed state on the vehicle (20) the detection area is aligned 90° to the direction of travel (21).

4. Apparatus (10) according to any one of claims 1 to 3,
**characterized in that**
the apparatus (10) only draws electricity from the vehicle (20).

5. Apparatus (10) according to any one of claims 1 to 4,
**characterized in that**
a data modem (15) for the wireless transmission of the linked data is provided.

6. Apparatus (10) according to claim 5,
**characterized in that**
the control and evaluation unit is designed for the continuous or quasi-continuous transmission of the linked data by means of the data modem (15) to an external server.

7. Apparatus (10) according to any one of claims 1 to 6,
**characterized in that**
the device (12) for position determination has an inertial measuring unit for optimization of the data.

8. Apparatus (10) according to any one of claims 1 to 7,
**characterized in that**
a separate external aerial (13) that can be connected to the apparatus (10) is provided for the device (12) for global position determination.

9. Apparatus (10) according to any one of claims 1 to 8,
**characterized in that**
the device (12) for position determination is designed for satellite-based position determination and is in particular designed according to the GPS, Galileo, Glonass and/or Beidou standard.

10. Apparatus (10) according to claim 9,
**characterized in that**
the device (12) for global position determination uses several standards in parallel.

11. Apparatus (10) according to any one of claims 1 to 10,
**characterized in that**
a marker database is provided and
**in that** the control and evaluation unit is designed to optimize the linked data by means of the marker database.

12. Parking space management system
**characterized by**
at least one vehicle (20) with an apparatus (10) according to any one of claims 1 to 11.

13. Method for acquiring information on an occupancy state of parking spaces with an apparatus (10) according to any one of claims 1 to 12,
**characterized in that**
**in that** the vehicle (20) is moved in road traffic,
**in that** by means of the sensor (11), which is a 1D LIDAR sensor and is designed to detect a distance of at least 40m, data on the distance between the sensor (11) and an object (25, 27) are determined and by means of the device (12) for position determination positional data are determined and
**in that** by the control and evaluation unit the data are linked as linked data and
**in that** the linked data are forwarded to an external evaluation unit.

## Revendications

1. Dispositif (10) de détection d'informations concernant un état d'occupation de places de stationnement, avec un capteur (11),
lequel présente une zone d'identification,
dans lequel la zone d'identification est orientée de manière latérale par rapport à la direction de déplacement (21) du véhicule (20) dans l'état fixé sur le véhicule (20), dans lequel le capteur (11) est réalisé pour déterminer des données concernant la distance entre le capteur (11) et un objet (25, 27),
dans lequel le capteur (11) est réalisé pour identifier au moins une distance de 40 m, **caractérisé en ce que**
le dispositif est réalisé de manière autonome sans intégration dans le système de véhicule,
un système de fixation est prévu pour être fixé sur un véhicule (20), lequel est réalisé pour prévoir le dispositif (10) dans la plage entre 40 cm et 70 cm par rapport au niveau de la chaussée,
le dispositif (10) présente un système (12) de définition de position,
une unité de commande et d'évaluation est prévue, laquelle est réalisée pour combiner les données du capteur (11) à des données du système (12) de définition de position, le capteur (11) est un capteur LIDAR 1D, et
la zone d'identification est orientée, dans l'état fixé sur le véhicule (20), entre 85° et 95° par rapport à la direction de déplacement (21).

2. Dispositif (10) selon la revendication 1, **caractérisé en ce que** le capteur (11) présente au moins une fréquence de balayage de 140 Hz.

3. Dispositif (10) selon la revendication 1 ou 2, **caractérisé en ce que** la zone d'identification est orientée dans l'état fixé sur le véhicule (20) à 90° par rapport à la direction de déplacement (21).

4. Dispositif (10) selon l'une quelconque des revendications 1 à 3, **caractérisé en ce que** le dispositif (10) se fournit seulement en courant auprès du véhicule (20).

5. Dispositif (10) selon l'une quelconque des revendications 1 à 4, **caractérisé en ce qu'**un modem de données (15) est prévu pour la transmission sans fil des données combinées.

6. Dispositif (10) selon la revendication 5, **caractérisé en ce que** l'unité de commande et d'évaluation est réalisée pour communiquer en continu ou de manière quasi continue les données combinées au moyen du modem de données (15) à un serveur externe.

7. Dispositif (10) selon l'une quelconque des revendications 1 à 6, **caractérisé en ce que** le système (12) de définition de position présente une unité de mesure inertielle destinée à optimiser les données.

8. Dispositif (10) selon l'une quelconque des revendications 1 à 7, **caractérisé en ce qu'**une antenne externe (13) séparée, laquelle peut être raccordée au dispositif (10), est prévue pour le système (12) de définition de position mondiale.

9. Dispositif (10) selon l'une quelconque des revendications 1 à 8, **caractérisé en ce que** le système (12) de définition de position est conçu pour définir la position de manière assistée par satellites, et est réalisé en particulier de manière à répondre à la norme GPS, Galileo, Glonass et/ou Beidou.

10. Dispositif (10) selon la revendication 9, **caractérisé en ce que** le système (12) de définition de position mondiale utilise en parallèle plusieurs normes.

11. Dispositif (10) selon l'une quelconque des revendications 1 à 10, **caractérisé en ce qu'**une base de données d'indicateurs est prévue, et l'unité de commande et d'évaluation est réalisée pour optimiser les données combinées à l'aide de la base de données de marqueur.

12. Système de gestion d'espace de stationnement, **caractérisé par** au moins un véhicule (20) avec un dispositif (10) selon l'une quelconque des revendications 1 à 11.

13. Procédé de détection d'informations concernant un état d'occupation de places de stationnement avec un dispositif (10) selon l'une quelconque des revendications 1 à 12, **caractérisé en ce que**
le véhicule (20) se déplace dans le trafic routier,
des données concernant la distance entre le capteur (11) et un objet (25, 27) sont déterminées au moyen du capteur (11), qui est un capteur LIDAR 1D et est réalisé pour pouvoir identifier au moins une distance de 40 m, et des données de position sont déterminées au moyen du système (12) de définition de position,
les données sont combinées en tant que données combinées par l'unité de commande et d'évaluation, et
les données combinées sont transférées à une unité d'évaluation externe.
